Europäisches Patentamt

European Patent Office

Office européen des brevets

(19)

(11) Numéro de publication : **0 066 490**
**B1**

(12) # FASCICULE DE BREVET EUROPÉEN

(45) Date de publication du fascicule du brevet :
25.07.84

(51) Int. Cl.³ : **F 03 B 15/12, H 02 P 9/00**

(21) Numéro de dépôt : **82400882.5**

(22) Date de dépôt : **12.05.82**

(54) **Dispositif de régulation de fréquence pour centrale hydro-électrique de basse chute.**

(30) Priorité : **18.05.81 FR 8110104**

(43) Date de publication de la demande :
**08.12.82 Bulletin 82/49**

(45) Mention de la délivrance du brevet :
**25.07.84 Bulletin 84/30**

(84) Etats contractants désignés :
**AT CH DE FR GB IT LI SE**

(56) Documents cités :
**CH-A- 286 240**
**DE-A- 1 503 282**
**FR-A- 1 356 366**
**FR-A- 1 577 503**
**FR-A- 1 589 454**

(73) Titulaire : **NEYRPIC**
**75 rue du Général Mangin**
**F-78100 Grenoble (FR)**

(72) Inventeur : **Thomas, Philippe**
**"Le Petit Montfleury" Corenc**
**F-38700 La Tronche (FR)**

(74) Mandataire : **Wind, Jacques et al**
**CREUSOT-LOIRE 15 rue Pasquier**
**F-75383 Paris Cedex 08 (FR)**

Jouve, 18, rue St-Denis, 75001 Paris, France

## Description

La présente invention se rapporte aux micro-centrales de basse chute, utilisant des turbines à roue à pales orientables, d'une puissance supérieure à environ un Mégawatt, et destinée à alimenter un réseau électrique isolé, comme décrites, par exemple, dans le CH-A-286 240.

Pour une microcentrale de basse chute de puissance supérieure à environ un Mégawatt, on utilise généralement une turbine, de type microbulbe ou Kaplan par exemple, équipée d'une roue dont les pales sont orientables. La régulation de fréquence du groupe se fait donc, à partir du régulateur de vitesse, par action sur l'inclinaison des pales, ce qui règle le débit et donc la puissance fournie afin d'éviter par exemple une survitesse due à une baisse de consommation d'électricité. Ce système de régulation de fréquence présente néanmoins un gros inconvénient, du fait qu'il n'est pas possible, sous peine de créer des surpressions dans le conduit d'arrivée d'eau à la turbine, de manœuvrer les pales en un temps inférieur à une dizaine de secondes environ. Pendant cette dizaine de secondes, le groupe risque de partir en survitesse, et donc la fréquence d'augmenter, ce qui peut être très préjudiciable à certains appareils d'utilisateurs.

Le dispositif de régulation de fréquence selon l'invention ne présente pas cet inconvénient. Il est caractérisé en ce qu'il est en outre équipé d'un absorbeur d'énergie branché aux bornes de l'alternateur sous contrôle du régulateur, ledit absorbeur d'énergie étant capable de dissiper un maximum égal à une portion N % de la puissance nominale du groupe, le régulateur lui fournissant, en régime permanent une consigne « charge partielle », par exemple « mi-charge », de telle sorte qu'il dissipe alors par exemple N/2 % de la puissance nominale du groupe. De la sorte, l'absorbeur sera prêt à réagir très rapidement à des variations éventuelles de charge sur le réseau de ± N/2 % dans le cas du choix d'une consigne « mi-charge ». Selon une autre caractéristique avantageuse de l'invention, et pour éviter de solliciter trop souvent la commande de positionnement des pales, le régulateur agit de manière telle que cette commande demeure invariante tant que l'absorbeur dissipe une puissance comprise dans une certaine fourchette autour de sa mi-charge ; en dehors de cette fourchette le régulateur commandera la modification de l'inclinaison des pales dans le sens convenable jusqu'à ramener la puissance absorbée à la valeur définie ci-dessus, soit par exemple N/2 %.

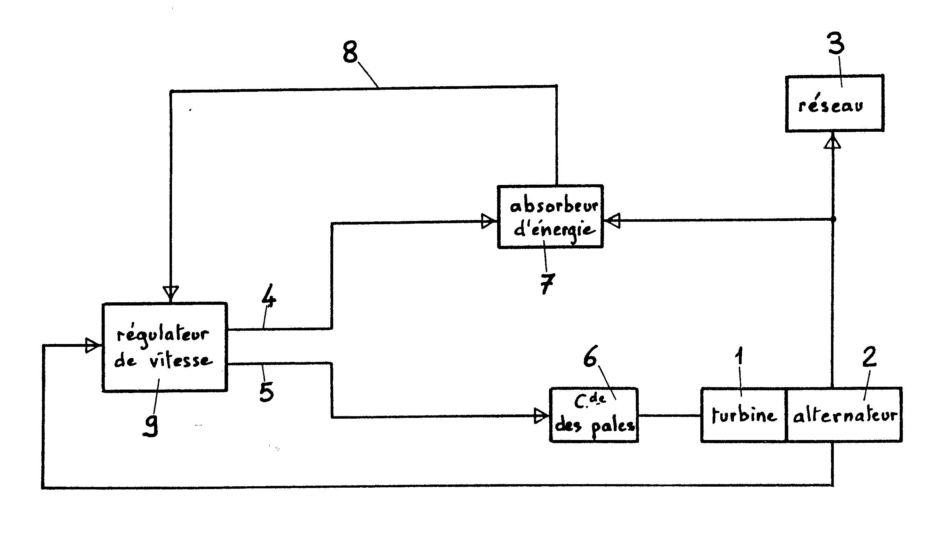

Ces caractéristiques apparaîtront plus clairement à l'aide de la description suivante d'un exemple de réalisation d'un dispositif de régulation de fréquence pour microcentrale de basse chute utilisant un microbulbe à pales orientables, en référence à la figure unique annexée qui en est une représentation simplifiée sous forme de schéma-blocs.

Sur la figure, la référence 1 désigne une turbine hydraulique de basse chute à pales orientables, tel qu'un microbulbe par exemple. La turbine 1 est couplée à un alternateur 2 fournissant de la puissance électrique à un réseau isolé 3.

De manière classique, l'alternateur est couplé à un régulateur 9 qui en mesure la fréquence avant de fournir sur ses sorties (4, 5) des signaux de consigne destinés à corriger la fréquence, en particulier le régulateur 9 peut fournir, sur sa sortie 5, un signal de correction à un dispositif 6 de commande de l'inclinaison des pales de la turbine, le dispositif 6 étant équipé par exemple de vérins hydrauliques à double-effet, de manière extrêmement classique dans cette technique.

Conformément à l'invention, un absorbeur d'énergie 7, réglé de manière à pouvoir dissiper au maximum par exemple 20 % de la puissance nominale du groupe, est branché, sous commande du régulateur 9 par la sortie 4, sur l'alternateur 2.

Cet absorbeur peut être constitué, de manière classique, soit par des résistances que le régulateur mettra progressivement en service aux bornes de l'alternateur, soit par un frein à courant de Foucault entraîné par un moteur asynchrone alimenté par l'alternateur 2, l'excitation du frein étant commandée par le régulateur 9. Cette dernière solution a l'avantage d'augmenter l'inertie des masses tournantes et donc de participer à l'atténuation des variations de fréquence consécutives à des variations de puissance sur le réseau.

En régime permanent, le régulateur 9 donne une consigne « mi-charge » à l'absorbeur qui dissipe donc ainsi 10 % de la puissance nominale du groupe. L'absorbeur est donc alors prêt à réagir très rapidement à des variations éventuelles de charge sur le réseau de ± 10 %.

Tant que l'absorbeur dissipe une puissance comprise dans une certaine fourchette autour de sa mi-charge, par exemple dans la fourchette allant de 8 % à 12 % de la puissance nominale du groupe, l'absorbeur fournit au régulateur un signal d'inhibition 8 qui interdit tout signal sur la sortie 5 destinée à la commande 6 des pales de la turbine. Au-delà, le régulateur agira sur le circuit 6 de façon à modifier l'inclinaison des pales dans le sens convenable jusqu'à ramener la puissance absorbée par l'absorbeur exactement à sa « mi-charge », soit à 10 % de la puissance nominale du groupe. De la sorte, la commande des pales sera peu sollicitée et pourra être très rustique, par exemple être constituée par une commande discontinue pilotant un électrodistributeur standard double-effet.

L'absorbeur réagissant presqu'instantanément, et les variations de puissance du réseau 3 étant dans la pratique très rarement supérieure à ± 10 % de la puissance nominale, on obtient, grâce à l'invention, une régulation de fréquence très efficace avec un minimum de pertes d'énergie.

En variante, la connection 8 peut être supprimée, le régulateur agissant alors toujours sur l'absorbeur 7 et sur la commande des pales 6. Toutefois la solution exposée précédemment est préférentielle pour les raisons explicitées ci-dessus.

En variante également, et uniquement pour certaines conditions d'exploitation propres à certains réseaux, la plage d'absorption peut être rendue dissymétrique, par exemple + 5 %, – 10 % de la puissance nominale autour d'une valeur de consigne égale à 10 % de cette puissance. Dans ce dernier cas, la puissance consommée en permanence serait de 5 % de la puissance nominale. On réalise ainsi une économie relative à la puissance permanente dissipée dans l'absorbeur.

### Revendications

1. Dispositif de régulation de fréquence pour centrale hydro-électrique de basse-chute destinée à alimenter un réseau isolé (3), ladite centrale utilisant une turbine à roue à pales orientables (1) dont l'inclinaison peut être commandée par un régulateur de vitesse (9) recevant un signal de fréquence du groupe turbine-alternateur (1, 2), caractérisé en ce qu'il est en outre équipé d'un absorbeur d'énergie (7) branché aux bornes de l'alternateur (2) sous contrôle dudit régulateur (9), ledit absorbeur d'énergie étant capable de dissiper un maximum égal à une portion (par exemple, 20 %) de la puissance nominale du groupe, le régulateur lui fournissant, en régime permanent, une consigne « charge partielle » de telle sorte qu'il dissipe alors une fraction (par exemple, 10 %) de la puissance nominale du groupe inférieure audit maximum.

2. Dispositif de régulation selon la revendication 1, caractérisé en ce que ladite consigne est une consigne « mi-charge ».

3. Dispositif de régulation selon la revendication 1, caractérisé en ce que le régulateur (9) reçoit en outre un signal (8) en provenance de l'absorbeur d'énergie, et réagit à ce signal de manière à ne pas fournir de signal sur sa sortie (5) reliée au circuit (6) de commande de variation de l'inclinaison des pales tant que l'absorbeur dissipe une puissance comprise dans une fourchette (par exemple, 8 % à 12 %) autour de ladite charge partielle (par exemple, 10 %).

### Claims

1. A frequency control device for a low-fall hydro-electric power station intended to supply an isolated grid (3), the said power station employing a turbine having a wheel with steerable blades (1) whose inclination can be controlled by a speed regulator (9) receiving a frequency signal from the turbine-alternator group (1, 2), characterised in that it is additionally equipped with an energy absorber (7) connected to the terminals of the alternator (2) under the control of the said regulator (9), the said energy absorber being capable of dissipating a maximum equal to a part (for example, 20 %) of the nominal power of the group, the regulator providing it, continuously, with a « part load » instruction so that it then dissipates a fraction (for example 10 %) of the nominal power of the group, which is smaller than the said maximum.

2. A control device according to Claim 1, characterised in that the said instruction is a « half-load » instruction.

3. A control device according to Claim 1, characterised in that the regulator (9) receives additionally a signal (8) derived from the energy absorber and reacts to this signal so as not to provide a signal at its output (5) which is connected to the circuit (6) for controlling the variation of the inclination of the blades so long as the absorber dissipates a power which is in a range (for example 8 % to 12 %) straddling the said part load (for example, 10 %).

### Ansprüche

1. Vorrichtung zur Frequenzregelung für elektrische Wasserkraftwerke mit geringem Gefälle, die dazu bestimmt ist, ein isoliertes Stromnetz (3) zu speisen, wobei das Kraftwerk eine Drehschaufelturbine (1) verwendet, deren Drehschaufelneigung mittels eines Geschwindigkeitsreglers (9) steuerbar ist, der ein Frequenzsignal von der aus Turbine und Wechselstromgenerator bestehenden Einheit (1, 2) empfängt, dadurch gekennzeichnet, daß die Vorrichtung weiters mit einem Energieabsorber (7) versehen ist, der an die Klemmen des Wechselstromgenerators (2) unter Steuerung des Geschwindigkeitsreglers (9) angeschlossen ist, daß der Energieabsorber fähig ist, maximal eine Teilmenge (z. B. 20 %) der Nennleistung der Einheit umzusetzen und daß der Regler ständig an ihn ein Signal bzw. einen vorgeschriebenen Wert « Teilladung » so abgibt, daß er einen Bruchteil (z. B. 10 %) der Nennleistung der Einheit umsetzt, die geringer als das genannte Maximum ist.

2. Regelvorrichtung nach Anspruch 1, dadurch gekennzeichnet, daß das genannte Signal bzw. der vorgeschriebene Wert ein Signal « Halbladung » ist.

3. Regelvorrichtung nach Anspruch 1, dadurch gekennzeichnet, daß der Regler (9) außerdem ein Signal (8) vom Energieabsorber empfängt und auf dieses Signal so anspricht, daß er kein Signal an seinem Ausgang (5) abgibt, der mit dem Steuerkreis (6) für die Veränderung der Neigung der Drehschaufeln verbunden ist, während der Absorber eine Leistung umsetzt, die innerhalb eines Bereiches von z. B. 8 bis 12 % der Teilladung von z. B. 10 % liegt.